Europäisches Patentamt

European Patent Office

Office européen des brevets

(11) Publication number: **0 047 665**
A1

(12) # EUROPEAN PATENT APPLICATION

(21) Application number: **81304098.7**

(22) Date of filing: **08.09.81**

(51) Int. Cl.³: **C 22 B 34/14,** C 22 B 5/16

(30) Priority: **08.09.80 US 184684**

(43) Date of publication of application: **17.03.82**
**Bulletin 82/11**

(84) Designated Contracting States: **BE DE FR GB SE**

applicant: **WESTINGHOUSE ELECTRIC CORPORATION, Westinghouse Building Gateway Center, Pittsburgh Pennsylvania 15222 (US)**

(72) Inventor: **Evans, Harmon Aaron, 4060 West, 2550 South Ogden Utah (US)**

(74) Representative: **van Berlyn, Ronald, 23 Centre Heights, London NW3 6JG (GB)**

(54) **Improvements in or relating to metal distillation.**

(57) Apparatus for distilling metal characterizid by a retort for heating a charge comprising metal sponge and a sponge-forming reaction product to a temperature sufficient to cause evaporation of the reaction products from the metal sponge, a condenser for condensing the reaction products, and passage means between the retort and the condenser for conducting the vaporized reaction products to the condenser.

EP 0 047 665 A1

1

# IMPROVEMENTS IN OR RELATING TO METAL DISTILLATION

This invention relates to apparatus for distilling metals and, more particularly, it pertains to distillation apparatus for distilling reaction products from zirconium sponge.

Metals obtained from smelting operations contain various impurities which are usually removed in whole or in part before the metal can be used. The method of removing the impurities is generally designated as "refining" and includes, among other methods, distillation which is normally used for refining volatile metals, such as mercury, cadmium, and zinc, whereby the metal to be refined is placed in a suitable retort and heated to the boiling point. The resulting vapors are collected in a suitable condenser from which air is excluded. Refining by distillation is not confined however to the volatile metals and is useful for refining other metals, the impurities of which are volatile and therefore subject to distillation.

According to the present invention an apparatus for distilling metal is characterized in that said apparatus comprises retort means for heating a charge including metal sponge and sponge-forming reaction products to a temperature sufficient to cause evaporation of the reaction products from the metal sponge, condenser means for condensing the reaction products, and passage means between the retort means and the condenser means for conducting the vaporized reaction products to the condenser means.

The invention also includes a process for refining a body of metal sponge and reaction products which is characterized by the steps of heating a body of metal sponge and reaction products to a temperature sufficient to vaporize the reaction products, transferring the vaporized reaction products from the area of the metal sponge, and condensing the vaporized reaction products.

The advantage of the device of this invention is that non-volatile metals, such as the metals of the titanium family including titanium, zirconium and hafnium, after having been initially reduced from an ore, may be intermediately refined by distillation to distill off reaction products incurred in initial reduction of the metal, thereby preparing the remaining metal sponge for subsequent final refining.

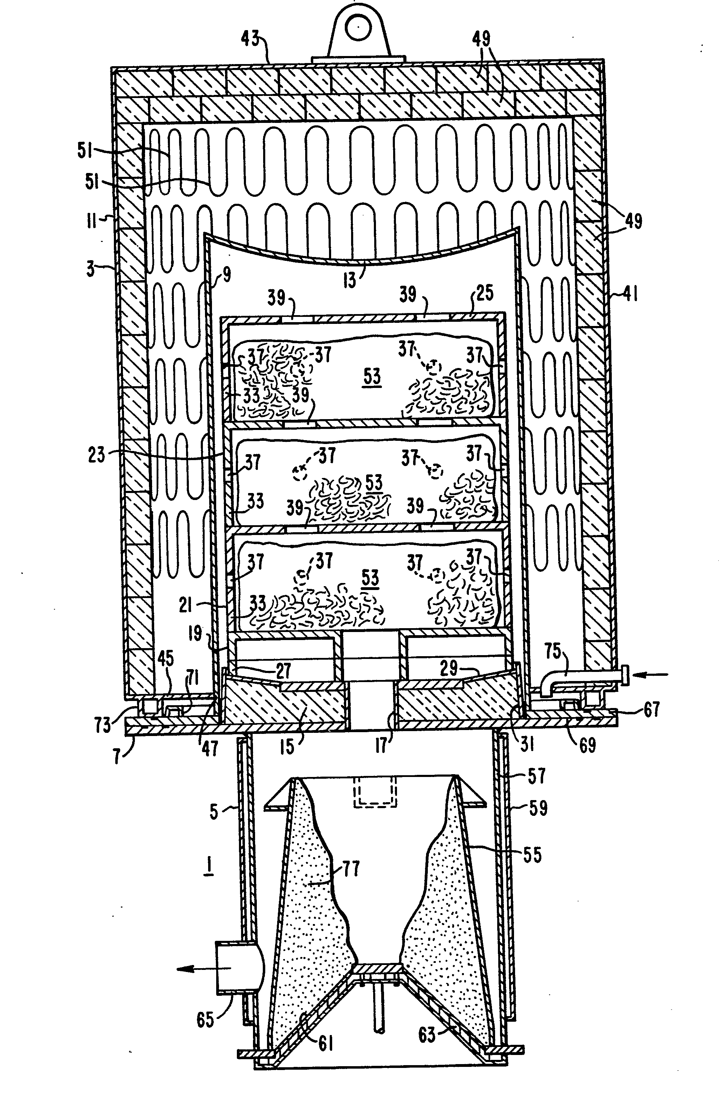

In order that the invention can be more clearly understood, a convenient embodiment thereof will now be described, by way of example, with reference to the accompanying drawing which is a vertical sectional view through a distillation apparatus for refining zirconium sponge.

Although the apparatus and process disclosed herein is directed primarily to the refining of some metals, other metals, such as titanium, which are initially reduced from their ore, such as by the Kroll process, to an intermediate refined status such as metal sponge, are susceptible to an intervening refining step, whereby reaction products from the initial reduction process are evaporated from the metal sponge to prepare the sponge for a subsequent refining process.

Referring to the drawing a distillation apparatus is generally indicated at 1 and it comprises a retort structure 3, and a condenser structure 5 which are separated by a separating wall 7.

The retort structure 3 comprises a retort 9 and a furnace 11 which are supported on the wall 7. The retort 9 is a tubular member having an upper closed wall 13 and a lower open end portion which is seated over a thickened portion of the wall 7, which includes insulation 15 which surrounds a passage 17 that extends through the wall 7 for communicating between the interior of the retort 9 and the condenser structure 5.

Within the retort 9 a plurality of baskets 19, 21, 23, 25 are stacked upon a grid 27 which is supported upon an upper wall 29 of the wall 7. A tubular wall 31 supports the upper wall 29 to provide space in which the insulation 15 is located.

The baskets 21, 23, 25 are cup-shaped members, preferably inverted, and comprising similar tubular walls 33 and bottom walls 35 which walls 33, 35 include openings 37, 39 through which vapors pass during the distillation process.

The furnace 11 comprises a tubular wall 41 and top wall 43. The lower end of the furnace 11 includes an inturned flange 45 which provides an opening 47 through which extends the retort 9. An insulating liner 49 of ceramic brick is disposed within the tubular wall 41 and the top wall 43. A plurality of electrical heating elements 51 are disposed within the liner 49 for heating the retort 9 and its contents.

Each basket 21, 23, 25 contains a body 53 of metallic sponge together with reaction products within and on the surfaces of the body.

Where the metal being refined is zirconium, the body 53 is comprised primarily of zirconium sponge with reaction products including magnesium and magnesium chloride ($MgCl_2$) which are derived from the following reaction:

$$ZrCl_4 + 3\ Mg \rightarrow Zr + Mg + 2\ MgCl_2 + \text{impurities.}$$

In the foregoing formula an excess of magnesium is used in order to expedite the reaction. The magnesium is recycled and the magnesium chloride is reduced to its elements which in turn are recycled in the Kroll process preceding the distillation procedure of this invention.

The condenser structure 5 comprises container 55 within a cooler 57 having an outer water jacket 59. A bottom wall 61 having a conical configuration also includes a water jacket 63. Moreover, a vacuum outlet 65 communicating with the interior of the cooler 57 communicates with vacuum means such as a vacuum pump (not shown).

In operation, bodies 53 of metal sponge from various batches or heats of metal are placed within the baskets 33 in a stacked relationship upon the grid 27 where they are enclosed within retort 9 which in turn is enclosed within the sleeve-type furnace 11. The retort 9 having a peripheral flange 67 forms a gas-tight joint 69 with the peripheral portion of the wall 7. A circular ridge 71 on the upper surface of the flange 67 serves as a guide for a corresponding ridge 73 on the under surface of the flange 45 to form a gas-tight joint between the furnace 11 and the flange 63. An inlet 75 is provided through the wall of the furnace 11 whereby an inert gas, such as argon, helium or both, is introduced into the atmosphere of the retort to dilute any air or oxygen contained within the retort 9.

The resistance heating elements 51 heat the interior of the retort 9 to a temperature of from about 350° to about 1100°C, that is, to temperatures above the temperatures of vaporization of magnesium and magnesium chloride.

Although zirconium is pyrophoric due to its heat-producing reaction with oxidizing elements, such as oxygen, larger bodies of the metal, such as ingots and plates, can be heated to temperatures without excessive oxidation or burning. Smaller pieces having high surface area-to-mass ratio, are easily ignited and burn at extremely high temperatures. It is for this reason that fine particles of zirconium below approximately 10 microns ignite spontaneously when dispersed in air at room temperature. Particles greater than about 18 microns will not ignite until heated above 350°C. As a result, the entire atmosphere within the retort 9 and the cooler 57 are evacuated to remove all traces of oxygen and nitrogen. An inert atmosphere including argon and/or helium is additionally provided, although it has been found that other inert gases are contaminants of zirconium, as are oxygen and nitrogen.

When the magnesium and magnesium chloride, which permeate the bodies 53 of zirconium sponge begin to vaporize, a vacuum at 10 microns, or 24-1/2 inches, draws the vapor from the bodies 53 through the openings 37, 59 through the passage 17 to the container 55 where the vapors condense and form a mass 77 of a mixture of magnesium and magnesium chloride within the cooled container 55.

Accordingly, reaction products, such as magnesium and magnesium chloride, may be distilled by vaporization from metal sponge, such as zirconium sponge, and are recovered for recycle through prior reduction steps by which the sponge is created. Many metals can be reduced from their compounds by more active metals such as magnesium and sodium, the former of which was used in the process disclosed hereinabove.

6

What we claim is:

1. Apparatus for distilling metal characterized in that said apparatus comprises retort means for heating a charge including metal sponge and sponge-forming reaction products to a temperature sufficient to cause evaporation of the reaction products from the metal sponge, condenser means for condensing the reaction products, and passage means between the retort means and the condenser means for conducting the vaporized reaction products to the condenser means.

2. Apparatus according to claim 1, characterized in that the retort means comprises a receptacle for containing the charge and a shell furnace surrounding the receptacle.

3. Apparatus according to claim 2, characterized in that the condenser means comprises a cooled container.

4. Apparatus according to claim 3, characterized in that the retort means and the condenser means are separated by an insulated wall.

5. Apparatus according to claim 4, characterized in that the retort means is disposed above the condenser means, and the passage means extend through the insulated wall.

6. Apparatus according to claim 5, characterized in that the retort means comprises an inverted cup-shaped vessel having a lower open end in gas-tight contact with the wall.

7. A process for refining a body of metal sponge and reaction products, characterized by the steps of heating a body of metal sponge and reaction products to a temperature sufficient to vaporize the reaction products, transferring the vaporized reaction products from the area of the metal sponge, and condensing the vaporized reaction products.

8. A process according to claim 7, characterized in that the metal sponge is zirconium and the reaction products are magnesium and magnesium chloride.

0047665

European Patent Office

**EUROPEAN SEARCH REPORT**

0047665

Application number

EP 81 30 4098

| Category | Citation of document with indication, where appropriate, of relevant passages | Relevant to claim | CLASSIFICATION OF THE APPLICATION (Int. Cl.³) |
|---|---|---|---|
| | **DOCUMENTS CONSIDERED TO BE RELEVANT** | | |
| X | FR - A - 2 259 910 (ISHIZUKA) <br><br> * figures 1,4; pages 5,6; claims * <br><br> -- | 1-3,5-8 | C 22 B 34/14 5/16 |
| | US - A - 3 767 381 (BIELEFELDT) <br><br> * abstract; figures; claims * <br><br> -- | 1-3,5-8 | |
| | DE - A - 2 756 849 (ISHIZUKA) <br><br> * figures; claims * <br><br> -- | 1 | TECHNICAL FIELDS SEARCHED (Int. Cl.³) <br><br> C 22 B <br> F 27 B |
| | US - A - 3 147 108 (RENNER) <br><br> * the whole document * <br><br> -- | 1 | |
| A | GB - A - 1 566 363 (ANDREEV et al.) | | |
| A | GB - A - 827 398 (DU PONT) | | |
| A | DE - A - 2 616 710 (TSCHERED NITSCHENKO et al.) | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| Place of search | Date of completion of the search | Examiner |
|---|---|---|
| The Hague | 26-11-1981 | OBERWALLENEY |

The present search report has been drawn up for all claims

EPO Form 1503.1 06.78